**Europäisches Patentamt**

**European Patent Office**

**Office européen des brevets**

(11) Publication number: **0 081 229**
**B1**

(12) **EUROPEAN PATENT SPECIFICATION**

(45) Date of publication of patent specification: 02.11.88

(21) Application number: 82111283.6

(22) Date of filing: 06.12.82

(51) Int. Cl.⁴: **G 05 D 16/06,** G 05 D 16/04, G 05 D 16/10

(54) **Pressure regulator.**

(30) Priority: 07.12.81 US 327800

(43) Date of publication of application:
15.06.83 Bulletin 83/24

(45) Publication of the grant of the patent:
02.11.88 Bulletin 88/44

(84) Designated Contracting States:
BE DE FR GB IT LU NL

(56) References cited:
DE-A-2 809 194
DE-U-8 027 421
FR-A-2 367 932
US-A- 702 266
US-A-3 248 131
US-A-3 756 558

(73) Proprietor: Sturman, Oded E.
18241 Andrea Circle North
Northridge, CA (US)
(73) Proprietor: Grill, Benjamin
9819 Etiwanda Avenue
Northridge, CA (US)
(73) Proprietor: Harrison, Lynn
23554 Cherry Street
Newhall, CA (US)

(72) Inventor: Sturman, Oded E.
18241 Andrea Circle North
Northridge, CA (US)
Inventor: Grill, Benjamin
9819 Etiwanda Avenue
Northridge, CA (US)
Inventor: Harrison, Lynn
23554 Cherry Street
Newhall, CA (US)

(74) Representative: Baillie, Iain Cameron
c/o Ladas & Parry Isartorplatz 5
D-8000 München 2 (DE)

Courier Press, Leamington Spa, England.

## Description

Technical Field

The present invention relates to pressure regulators, and more particularly, to those regulators using internal pressure balances for proper operation.

Background of the Prior Art

Pressure regulators to date which have relied on the internal balancing of fluid forces for operation, have been noted for their structural complexity and cost. Frequently, numerous springs, diaphragms and machined pieces where necessary to obtain a functional assembly. In addition, although the concept of balancing internal forces within a valve to ease operation is known in the Art, prior to the present invention, no regulator valve of which the applicant is aware balanced inlet pressure while using the outlet pressure to directly open or close the valve in response to a predetermined biasing force that is coupled with atmospheric pressure.

An example of a pressure balance regulator is U.S. Patent 3,756,558 by Okui. Okui discloses a fluid control valve having an inlet 17 and an outlet 21, with a moving member between the inlet and outlet chambers. In the Okui valve, *both* the input and output portions of the device are pressure balanced, thereby requiring additional structure to sense the outlet pressure the control the moving member for regulation of flow. This additional structure adds cost to the device, and increases the likelihood of breakdown. As will be discussed below, the present invention minimizes cost and subsequent breakdowns by providing a simple but effective use of internal pressure balancing.

An additional example of previous pressure regulating valves is U.S. Patent 702,266 by Webb. Webb discloses a valve which is pressure balanced on the input side and output side but which balance does not depend on atmospheric pressure.

Accordingly, there exists a need for a pressure regulating valve which is structurally simpler and more cost effective than existing valves.

Summary of the Invention

In accordance with the present invention, a pressure regulator is provided wherein the fluid pressure is balanced on the inlet side and partially balanced on the output side. The regulator comprises a valve housing defining an inlet and outlet chamber. A valve seat in conjunction with the piston member forms a valve controlling fluid passing from a piston and piston plate, the piston plate engaging the valve seat to control fluid flow. The diameters of the chambers and the piston are selected so that the inlet pressure is balanced. Thus, the inlet pressure causes no net force on the moving piston member, and does not contribute to either the opening or the closing of the valve. On the outlet side, the piston plate is sealed with respect to the valve seat at a diameter which is less than that of the piston plate, such that the outlet pressure causes a force on the piston to seat the member against the valve seat. This unbalanced force on the member is opposed by a coil spring and atmospheric pressure to provide a force on the piston so as to unseat the piston plate from the valve seat. Thus, the outlet pressure will be regulated at a point where the net unbalanced outlet force equals the spring force. Additional embodiments are disclosed which allow the force of the coil spring to be selectively adjusted, thereby permitting fluid regulation at a variety of outlet pressures.

Other objects as well as various inherent advantages of the invention will become more readily apparent from the following detailed description, which proceeds with reference to the accompanying drawings:

A pressure regulator comprising a housing (32) including outlet (22) and inlet (24) chambers in fluid communication through, a valve seat (40) disposed in said housing (32), a piston (34) movably disposed in said housing (32) and being coupled to a valve member (50, 52, 58) which sealingly engages said valve seat (4) when said piston (34) to prevent fluid flow past said piston except through said valve seat (40), said valve member (50, 52, 58) being shaped such that fluid within said output chamber (22) exerts a net force using said valve member (50, 52, 58) toward said valve seat, and there are provided means (62) biasing said piston (34) away from said valve seat (40). Furthermore, as the applicant himself has admitted, the head of the piston is of such shape that the valve is balanced against the fluid pressure in the inlet pressure.

Brief Description of the Drawing

Figure 1 is a perspective view of a pressure regulator in accordance with the first embodiment of the present invention;

Figure 2 is a vertical cross section of the valve of Figure 1 taken along line 2—2 of Figure 1, showing the regulator in an open position;

Figure 3 is a partial elevational cross section of the preferred embodiment taken along line 3—3 of Figure 2 showing the shape of a piston plate;

Figure 4 is a vertical cross section of the pressure regulator illustrated in Figure 2, showing the regulator in a closed position;

Figure 5 is perspective view of an alternate embodiment of the present invention;

Figure 6 is a vertical cross sectional view taken along line 6—6 of Figure 5, showing the valve as depicted in Figure 5 in a closed position;

Figure 7 depicts the valve of Figure 6 in an open position.

Figure 8 is a vertical cross sectional view of a third embodiment of the present invention illustrating the use of diaphragms.

Detailed Description of the Invention

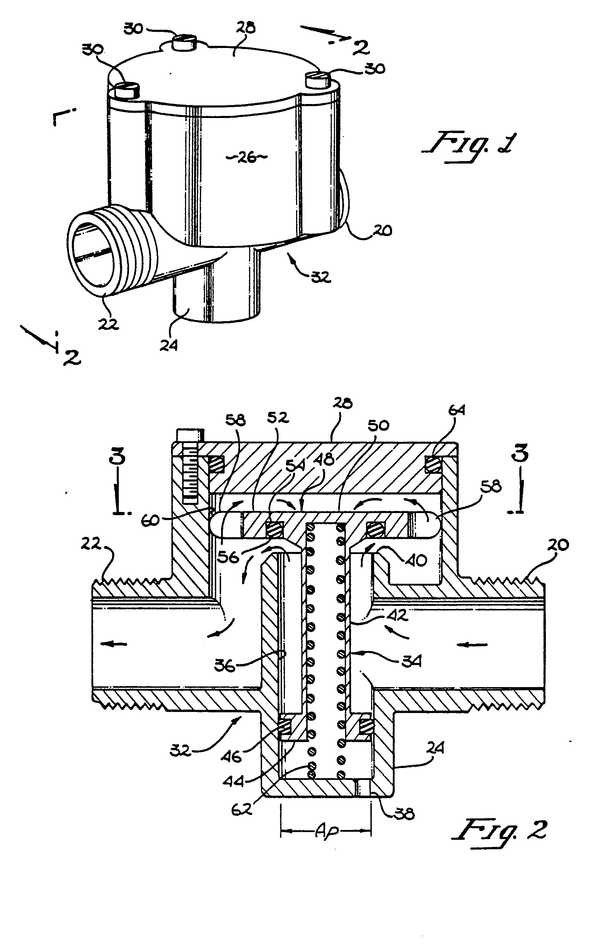

First referring to Figure 1, a prospective view of one embodiment of the present invention may be seen. This particular embodiment is characterized by a body having an inlet port 20 and an outlet port 22, the inlet and outlet ports of this embodiment being threaded for connection to standard threaded coupling systems. Obviously, however, other, preferably standard couplings may be provided for ports 20 and 22, such as by way of example, unthreaded cylindrical protrusions for coupling to flexible hosing using conventional hose clamps. In addition to the inlet and outlet ports, the body is further characterized by a relatively small diameter cylindrical protrusion 24 and a considerably larger cylindrical region 26, the upper region 26 being capped by a top plate 28 held in position by three screws 30 threaded into the top of the body.

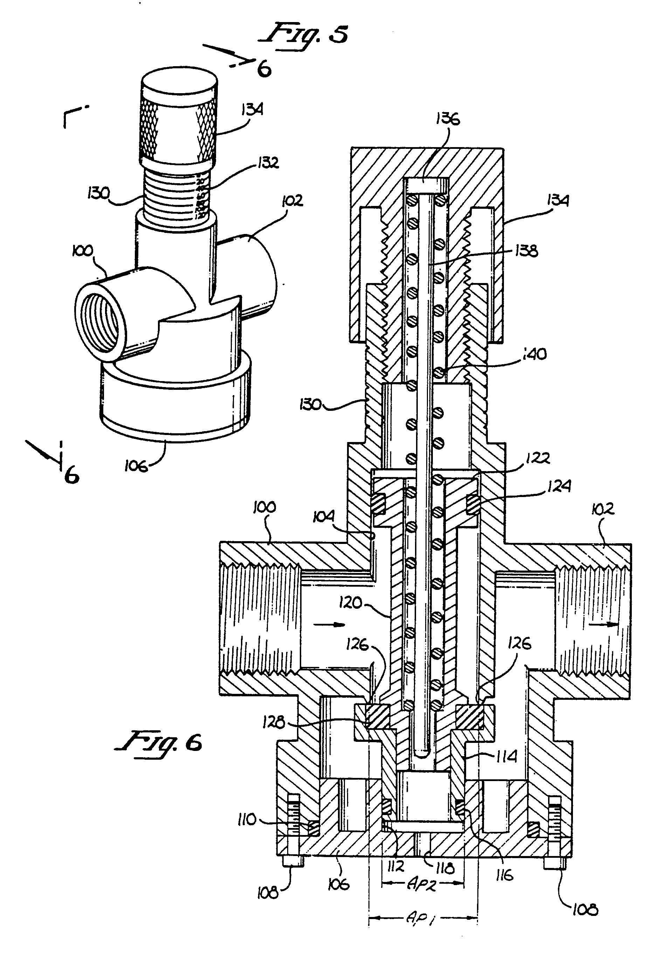

Now referring to Figure 2, a cross section of the pressure regulator of Figure 1 taken along line 2—2 of that figure may be seen. This figure illustrates the internal structure and mechanism of the pressure regulator, specifically illustrating that mechanism in a regulating valve open position characteristic of the state of the regulator when delivering substantial flow rates of fluid through the outlet port 22 at the regulated pressure. Figure 4 is a similar cross section, through illustrating the state of the regulator when the outlet flow port 22 is substantially zero. The flow through the outlet port, of course, is dependent not upon the pressure regulator, but upon the flow through whatever means or system is coupled to the outlet port, the regulator valve opening and closing in response to relatively low pressure changes at the outlet port 22, as shall subsequently be described in greater detail.

Aside from the body, generally indicated by the numeral 32, and the cap 28, there is contained within the body 32 a piston-like member, generally indicated by the numeral 34. The piston-like member fits within a cylinder 36 in body 32. The cylinder 36 in this embodiment is generally othogonal to the substantially coaxial inlet and outlet ports, being intercepted intermediate the ends of the cylinder by the inlet port 20. At one end (specifically the lower end as oriented in Figures 2 and 4) the cylinder 36 is vented to the atmosphere through a vent hole 38. At the upper end the cylinder 36 terminates at a valve seat 40, the valve seat being configured so as to have a diameter substantially equal to the diameter of the cylinder itself. The inlet port 20, of course, is in direct fluid communication with the outlet port 22 through the area defined by the valve seat 40.

The piston-like member 34 is characterized by a central cylindrical section 42 of a diameter substantially less than the cylinder 36 so as to provide an anular flow region therebetween of substantial cross sectional area. At the lower end of the cylindrical section 42 is a flanged area 44 containing an O-ring 46 for slideably and sealingly engaging the lower region of cylinder 36. At the upper end of cylindrical region 42 is a piston plate generally indicated by the numeral 48, characterized by a central region 50 and a peripheral region 52. The central region 50 and peripheral region 52 are effectively separated by a groove 54

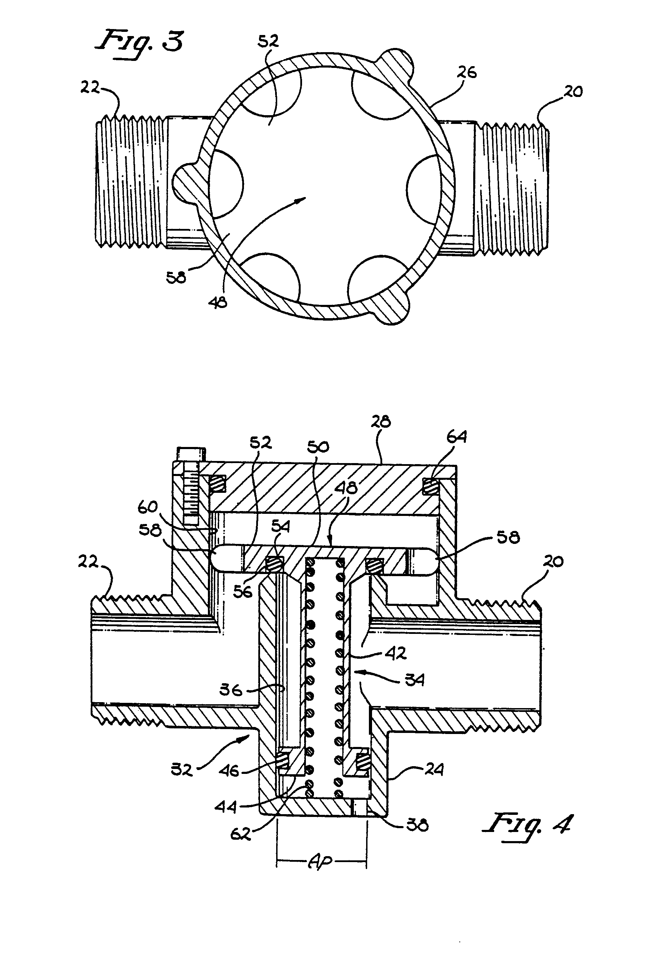

containing an O-ring 56 of the same diameter as the valve seat 40. As may be seen in Figure 3, which is a view taken along line 3—3 of Figure 2, the peripheral region of 52 of top plate 48 has a plurality of radially outwardly extending fingers 58 loosely slideable on the internal cylindrical surface 60 of the upper portion 26 of the body 32 of the regulator.

The piston-like member 34 is a generally hollow member with a coil spring 62 being disposed within the piston-like member to yieldably encourage the piston-like member in an upward direction with a predetermined force, as set by the spring rate and preload of the coil spring. The piston-like member 34 and the coil spring, of course, are readily assembled as shown prior to the placement of cap 28 in position, the cap itself being sealed with respect to the upper portion 26 of the body 32 by O-ring 64. Thus it may be seen that the entire assembly is comprised of three specially formed pieces, specifically body 32, piston-like member 34 and cap 28, three screws for holding the cap on, three O-rings and coil spring. The three special parts, specifically the piston-like member, the body and the cap, may be injection molded parts if desired, as a substantial percentage of the market for pressure regulators of this type would be expected to be for providing regulated pressures in the range of 0.3 to 7 bars (5 to 100 psi) from a source having an upper pressure limit of not much higher than 7 bars (100 psi). In that regard, even the source may itself be regulated, as pressure regulators are frequently used to receive fluid from a regulated source and to deliver that fluid at a lower regulated pressure.

The operation of the device of Figures 1 through 4 is as follows. Referring first to Figure 4, it will be noted that the pressure in inlet port 20 acts on both the upper and lower portion of the piston-like member 34 with equal force so that there is no net force on the piston-like member due to the inlet pressure. There is a force through vent 38, specifically a force upward equal to $P_a \times A_p$, where $P_a$ is the atmospheric pressure and $A_p$ is the area of the piston-like member in cylinder 36, i.e., the cross-sectional area of the cylindrical region 36. In addition of course, there is an upward force due to the spring $F_s$. With respect to the pressure on the outlet side of the regulator, that pressure acts equally on the upper and lower surfaces of the peripheral region 52 of the piston plate 48 so as to cause no net force thereon. However, with respect to the central region 50 of the piston plate, the outlet pressure force is not balanced, so that there is a downward force equal to $P_o \times A_p$, where $P_o$ is the absolute outlet pressure of the regulator.

Thus:

$$F_s + P_a \times A_p = P_o \times A_p, \text{ or } F_s = A_p (P_o - P_a) = A_p \times P_{og}$$

where $P_{og}$ is the guage pressure output of the regulator.

Thus, in operation, variation in the inlet pressure has no effect on the operation of the device. If the outlet pressure tends to fall below the regulated value, the pressure force on the top of the piston-like member 34 drops so that coil spring 62 urges the piston-like member upward toward the valve open position of Figure 2, supplying sufficient fluid through the outlet port to maintain the outlet pressure at the regulated value. If, on the other hand, the flow in whatever utilization means is using the output of the regulator falls to zero, the valve will close at the regulated pressure as shown in Figure 4.

The pressure regulator of Figures 1 through 4 is particularly advantageous because of its simplicity and ease of manufacture, while still providing good regulation over various flow and inlet pressure ranges. In certain instances however, the force requirements of the coil spring 62 to meet the size and pressure requirements of such regulators is inconvenient to achieve. Further, there may be numerous applications wherein an adjustable regulator would be desired. Thus, an alternate embodiment regulator may be seen in Figures 5 through 7. This embodiment has a body having an inlet port 100 and an outlet port 102, the inlet port intercepting an internal cylindrical region 104 of the body. The body is sealed at the bottom thereof by a bottom plate 106 held in position by screws 108 and sealed with respect to the body by O-ring 110. The bottom plate 106 contains a small upward facing cylinder 112 of area $A_{p2}$, the area of cylindrical region 104 being $A_{p1}$. Slideably fitting within cylinder 112 is a member 114, sealed with respect to the cylinder by an O-ring 116. The cylinder itself is vented through opening or vent 118 in the bottom cap 106.

Member 114 is joined by threads, solvent welding or ultrasonic welding to the lower portion of a piston-like member 120, the upper end of which has a flange 122 thereon sliding within the cylindrical region 104 and being sealed with respect thereto by O-ring 124. The lower end of the cylindrical region 104 ends in a valve seat 126, with a rubber or rubber-like sealing member 128 trapped between member 114 and piston-like member 120 providing a good seal with the valve seat when the assembly is in the upper position shown in Figure 6.

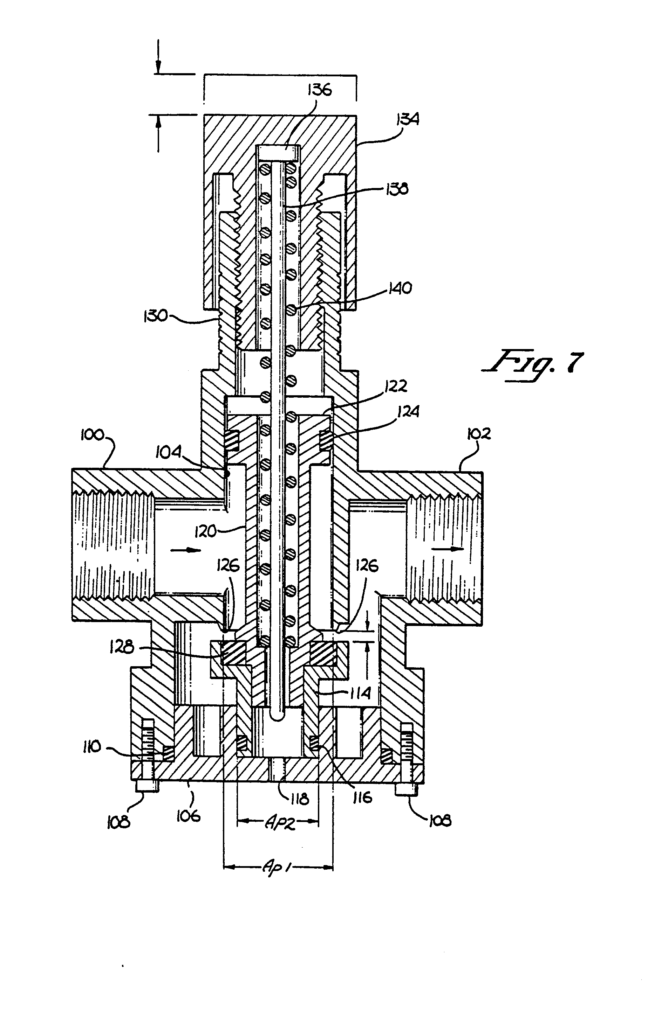

At the top of the body is a threaded stem 130 containing an appropriate scale 132 thereon, which in conjunction with the lower edge of screw cap 134 provides a readily visible indication of the pressure setting of the regulator. The screw cap 134, as may be seen in Figures 6 and 7, is configured to receive the head 136 of a metal pin 138, which pin maintains coil spring 140 straight, preventing the coil spring from buckling under the compressive load therein. The coil spring, as may be seen in Figures 6 and 7, exerts a downward force on the lower end of piston-like member 120, encouraging the assembly of the piston-like member 120, member 114 and rubber seal member 128 downward.

This configuration functions very similar to the embodiment of Figures 1 through 4, with various exceptions. For instance, the inlet pressure is balanced, as may be seen in Figure 6, in that the inlet pressure creates no net force on the moving assembly. Similarly the atmospheric pressure forces within the area of cylindrical region 112, specifically the area $A_{p2}$ are balanced by the atmospheric pressure forces within the same area above region 122 of the piston-like member 120. Outside this area, i.e., in the angular area between the diameter of the area $A_{p2}$ and the area $A_{p1}$ of the cylindrical region 104, the full outlet pressure is operative to encourage the assembly upward. There is, of course, a downward force due to the ambient pressure on the same annular area above region 122 of the piston-like member 120, as well as the downward force of the coil spring 140, which may be varied as desired by rotation of the screw cap 134. Consequently, it may be seen that the force balance, i.e., the regulated pressure, is achieved when the following equation is satisfied:

$$F_s = P_{og} (A_{p1} - A_{p2}).$$

Thus it may be seen that in this case part of the outlet pressure is also balanced so that by appropriate selection of the various dimensions of the pressure regulator, dependant upon the specific requirements of the application, particularly stiff or especially heavily preloaded coil spring requirement may be avoided. As before, pressure regulators of this type may be manufactured for a relatively low cost, using plastic injection molded parts for the more normally encountered pressure ranges, or may be fabricated for metal for higher pressure applications. Of course, various changes in detailed design, proportions, etc., may readily be incorporated in the design of the regulators in accordance with the present invention to accommodate flow rates, pressures, temperatures, corrosive fluids, etc., as an application may require.

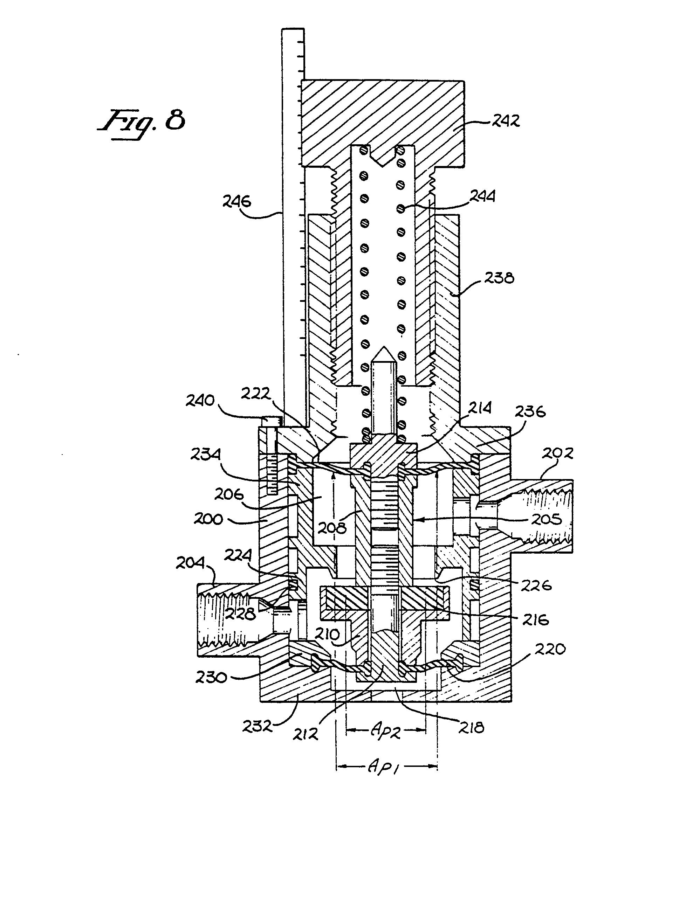

Referring now to Figure 8, a third embodiment of the present invention is disclosed. It will be noted that the operation of this embodiment is similar to that of the previous embodiments, in that the inlet pressure is balanced, with an unbalanced output pressure working against the known spring force, acting downward, to regulate the position of a moving central piston-like assembly, generally indicated by the numeral 205. However, the embodiment of Figure 8 differs from the earlier embodiments in that the O-rings used to seal the moving members in the earlier embodiments have been replaced with diaphragms to eliminate the sliding seals.

Lower body member 200 has an inlet port 202 and an outlet port 204 communicating with the interior region 206 thereof. Within the interior 206 is the piston-like assembly 205 comprised of a cylindical member 208, a valve seat support 210, a lower screw member 212 and an upper screw member 214. Located between the cylindrical member 208 and the valve seat support member 210 is a rubber or rubber-like seal member 216. Also, trapped and sealably retained between support member 210 and the head 218 of lower screw member 212 is the inner periphery of a lower diaphragm 220. Similarly sealingly retained between upper screw member 214 and the top of cylindrical member 208 is the inner periphery of an upper diaphragm 222. The inner periphery of the diaphragms (as well as the outer peripheries thereof) are molded with an integral O-ring type sealing bead thereon which, when located in an appropriate groove on the mating parts, provides for an O-ring like seal with respect thereto. It also provides for positive anchoring of the inner and outer peripheries to resist radial distortion in the diaphragms in those regions as a result of the operating pressures thereon.

Located within the body 200 is a support member 244 which defines a downward directed valve seat 226 disposed to be intercepted by the top surface of seal member 216 when the piston-like assembly moves to an upward position (the assembly being shown in a lower regulating valve open position in Figure 8). The support member 224 of course is appropriately ported to allow fluid communication between the inlet port 202 and the region above valve seat 226, and similar fluid communication between the region below valve seat 226 and the outlet port 204. An O-ring 228 seals the periphery of the support member 224 with the inner diameter of the lower valve body 220.

The outer periphery of the lower diaphragm 220 is retained between the lower portion 230 of support member 224 and the bottom 232 of the body 200. Similarly the outer periphery of the upper diaphragm 222 is supported between the upper portion 234 of support member 224 and the lower portion 236 of an upper body member 238 fastened to the lower body member by screws 240. Also the cavities below diaphragm 220 and above diaphragm 222 are vented to the atmosphere. The upper body member 238 is internally threaded to receive an adjustment screw member 242 entrapping coil spring 244 between the adjustment screw 242 and screw member 214 to provide an adjustable downward spring force on the piston-like assembly of the valve. A scale bar 246 fastened to upper body member 238 provides an indication of the regulated pressure when read in conjunction with the vertical position of the adjustment screw 242.

The operation of the embodiment of Figure 8 is substantially the same as that of Figures 5 through 7. In particular, the inlet pressure through port 202 provides an upward force on diaphragm 222, part of which is transmitted to the body of the pressure regulator and part of which is transmitted inward to the moveable assembly 205. Each of these forces is proportional to the pressure on the diaphragm and accordingly, one can calculate an equivalent piston area for which the same pressure would create the same force on the moveable assembly 205. In the embodiment of Figure 8, the various' members supporting the upper diaphragm 222 are proportioned so that the equivalent area is equal to the area of the valve seat 226, which area is labeled $A_{p1}$ in Figure 8, and is functionally equivalent to the area $A_{p1}$ of the embodiment of Figure 6. The lower diaphragm 220, as well as the members on which it is supported, are proportioned so that the equivalent area of that diaphragm is a predetermined amount smaller than the area $A_{p1}$, i.e., specifically $A_{p1}$ as identified in Figure 8. Here again this area is equivalent to the area $A_{p2}$ of Figure 6. Thus the equation heretofor given for the operation of the embodiment of Figures 5 through 7 is also applicable to the embodiment of Figure 8, if the equivalent areas for the two diaphragms are used in place of the two piston areas.

In both the preferred and alternate embodiments, a regulator has been described which provides a simple and cost effective means for regulating pressure and fluid lines.

## Claims

1. A pressure regulator comprising: a housing (32) including outlet (22, 102, 204) and inlet (20, 100, 202) chambers in fluid communication through a valve seat (40, 126, 226) disposed between said inlet (20, 100, 202) and outlet (22, 102, 204) chambers; a piston (34, 120, 205) movably disposed in said housing (32), said piston (34, 120, 205) being coupled to a valve member (48, 122, 214) which sealingly engages said valve seat (40, 126, 226) when said piston (34, 120, 205) is in a first position; sealing means (56, 124, 216, 222, 220) for sealing said piston (34, 120, 205) to prevent fluid flow past said piston (34, 120, 205) except through said valve seat (40, 126, 210); said valve member (48, 122, 214) being shaped such that fluid within said outlet chamber (22, 102, 204) exerts a net force urging said valve member (48, 122, 214) toward said valve seat (40, 126, 210); and means (62, 140, 244) for biasing said piston away from said valve seat (40, 126, 210), said regulator being characterized in that said housing includes a vent (38, 118) in fluid communication with the outside atmosphere and in that said biasing means (62, 140, 244) and said valve member (48, 122, 214) includes a central section (50) which on one side opposite said valve seat (40, 126, 226) is acted upon by the outlet pressure and which on its opposite side is acted upon by said biasing means (62, 140, 244) and the pressure admitted through said vent (38, 118).

2. The pressure regulator of Claim 1 further characterized in that said housing (32) includes a cylindrical section (36, 104, 208) providing fluid communication between said outlet (22, 102, 204) and inlet (20, 100, 202) chambers, said valve seat (40, 126, 226) being disposed at one end of said cylindrical section (36, 104, 208), said piston (34, 120, 205) being movably received in said cylindrical section (36, 104, 206), and said sealing means (56, 124, 216, 222, 220) preventing fluid flow out of said cylinder except through said valve seat (40, 126, 226).

3. The pressure regulator of Claim 1 further characterized in that said biasing means (62, 140) is housed within said piston (34, 120) and said housing (32) and is sealed by means of said piston (34, 120) from said inlet (20, 100) and outlet (22, 102) chambers.

4. The pressure regulator of Claim 2 further characterized in that said valve member (48, 122, 214) is of greater diameter than that of said cylindrical section (36, 104, 208).

5. The pressure regulator of Claim 4 further characterized in that said valve member (48) includes a plurality of fingers (58) spaced circumferentially around said valve member (48) at a greater diameter than that of said cylindrical section (36) to allow fluid to flow in and around said valve member (48).

6. The regulator of Claim 1 further characterized in that said piston (34, 120, 205) is shaped such that fluid pressure within said inlet chamber (20, 100, 202) and cylindrical section (36, 104, 208) does not exert any substantial axially acting force on said piston (34, 120, 205).

7. The pressure regulator of Claim 1 further characterized by means (134, 136, 138) for compressing said biasing means (140) to any of a plurality of positions, thereby providing a biasing force on said piston (205) which can be selectively varied.

8. The regulator of Claim 1 further characterized in that said sealing means (56, 124, 216) is a means for slidably sealing said piston to prevent fluid leakage in said cylindrical section.

9. The pressure regulator of Claim 2 further characterized in that said sealing means (216, 220, 222) includes a first resilient diaphragm (222) mounted between said piston (205) and said housing to define one wall of said inlet chamber (202) and to seal said housing from fluid leakage, said diaphragm (222) being a means for allowing said piston to reciprocate to and from said first position, said valve seat (226) and said first resilient diaphragm (222) being proportioned so that fluid entering said inlet chamber (202) does not produce a substantial axially acting net force on said piston (205).

10. The pressure regulator of Claim 8 further characterized in that said sealing means (216) further includes a second resilient diaphragm (220) having an effective diameter which is less than said first resilient diaphragm (222), said second resilient diaphragm (220) being coupled between said piston and said housing to define one wall of said outlet chamber (204).

## Patentansprüche

1. Druckregelventil mit einem Gehäuse (32), das eine Austrittskammer (22, 102, 204) und eine Eintrittskammer (20, 100, 202) besitzt, die durch einen zwischen der Eintrittskammer (20, 100, 202) und der Austrittskammer (22, 102, 204) angeordneten Ventilsitz (40, 126, 226) hindurch miteinander in Strömungsverbindung stehen: ferner, mit einem in dem Gehäuse (32) beweglich angeordneten Kolben (34, 120, 205), der mit einem Absperrkörper (48, 122, 214) gekuppelt ist, der sich dichtend an den Ventilsitz (40, 126, 214) anlegt, wenn sich der Kolben (34, 120, 205) in einer ersten Stellung befindet; ferner mit einer Dichteinrichtung (56, 124, 216, 222, 220) zum Abdichten des Kolbens (34, 120, 205) derart, daß Fluid nur durch den Ventilsitz (40, 126, 210) hindurch an dem Kolben (34, 120, 205) vorbeiströmen kann; wobei der Absperrkörper (48, 122, 214) so geformt ist, daß das Fluid in der Austrittskammer (22, 102, 204) eine resultierende Kraft ausübt, die den Absperrkörper (48, 122, 214) zu dem Ventilsitz (40, 126, 210) hin zu bewegen trachtet, ferner mit einer Vorbelastungseinrichtung (62, 140, 244), die den Kolben von dem Ventilsitz (40, 126, 210) weg zu bewegen trachtet, wobei das Druckregelventil dadurch gekennzeichnet ist, daß das Gehäuse einen Druckausgleichskanal (38, 118) besitzt, der mit der Außenatmosphäre in Strömungsverbindung steht, und daß die Vorbelastungseinrichtung (62, 140, 244) und der Absperrkörper (48, 122, 214) einen mittleren Abschnitt (50) besitzt, der auf der dem Ventilsitz (40, 126, 226) entgegengesetzten Seite mit dem Austrittsdruck und auf der entgegengesetzten Seite von der Vorbelastungseinrichtung und mit dem durch den Druckausgleichskanal (38, 118) eingelassenen Druck beaufschlagt wird.

2. Druckregelventil nach Anspruch 1, dadurch gekennzeichnet, daß das Gehäuse (32) einen zylindrischen Teil (36, 104, 208) besitzt, der eine Strömungsverbindung zwischen der Austrittskammer (22, 102, 104) und der Eintrittskammer (20, 100, 202) herstellt, daß der Ventilsitz (40, 126, 226) am einen Ende des zylindrischen Teils (36, 104, 208) angeordnet ist, daß der Kolben (34, 120, 205) von dem zylindrischen Teil (36, 104, 208) bewegbar aufgenommen wird und daß die Dichteinrichtung (56, 124, 216, 222, 220) ein Ausströmen von Fluid aus dem zylindrischen Teil nur durch den Ventilsitz (40, 126, 226) hindurch gestattet.

3. Druckregelventil nach Anspruch 1, dadurch gekennzeichnet, daß die Vorbelastungseinrichtung (62, 140) in dem Kolben (34, 120) und dem Gehäuse (32) angeordnet und durch den Kolben (34, 120) gegenüber der Eintrittskammer (20, 100) und der Austrittskammer (22, 102) abgedichtet ist.

4. Druckregelventil nach Anspruch 2, dadurch gekennzeichnet, daß der Absperrkörper (48, 122, 214) im Durchmesser größer ist als der zylindrische Teil (36, 104, 208).

5. Druckregelventil nach Anspruch 4, dadurch gekennzeichnet, daß der Absperrkörper (48) eine Mehrzahl von Fingern (58) besitzt, die in der Umfangsrichtung in Abständen voneinander um den Absperrkörper (48) herum auf einem Druchmesser angeordnet sind, der größer ist als der des zylindrischen Teils (36), so daß sie ein Einströmen von Fluid um den Absperrkörper (48) herum gestatten.

6. Druckregelventil nach Anspruch 1, dadurch gekennzeichnet, daß der Kolben (34, 120, 205) so geformt ist, daß ein in der Eintrittskammer (20, 100, 202) und dem zylinderischen Teil (36, 104, 208) herrschender Fluiddruck auf den Kolben (34, 120, 205) im wesentlichen keine axial wirkende Kraft ausübt.

7. Druckregelventil nach Anspruch 1, dadurch gekennzeichnet durch eine Einrichtung (134, 136, 138) zum Zusammendrücken der Vorbelastungseinrichtung (140) in eine von mehreren Stellungen, so daß die auf den Kolben (205) ausgeübte Vorbelastungskraft wahlweise veränderbar ist.

8. Druckregelventil nach Anspruch 1, dadurch gekennzeichnet, daß die Dichteinrichtung (56, 124, 126) eine Einrichtung zum Gleitabdichten des Kolbens ist, so daß ein Entweichen von Fluid in dem zylindrishen Teil (36, 208, 104) verhindert wird.

9. Druckregelventil nach Anspruch 2, dadurch gekennzeichnet, daß die Abdichteinrichtung (216, 220, 222) eine erste elastiche Membran (222) aufweist, die zwischen dem Kolben (205) und dem Gehäuse montiert ist und eine Wandung der Eintrittskammer (202) bildet und das Gehäuse gegen ein Entweichen von Fluid abdichtet, daß die Membran (222) eine Einrichtung ist, die dem Kolben eine hin- und hergehende Bewegung des Kolbens in die erste Stellung und aus ihr gestattet, und daß der Ventilsitz (226) und die erste elastische Membran (222) relativ zueinander so bemessen sind, daß in die Eintrittskammer (202) eintretendes Fluid auf den Kolben (205) im wesentlichen keine axial wirkende Kraft ausübt.

10. Druckregelventil nach Anspruch 8, dadurch gekennzeichnet, daß die Dichteinrichtung (216) ferner eine zweite elastische Membran (220) besitzt, die einen kleineren wirksamen Durchmesser hat als die erste elastische Membran (222) und die zwischen dem Kolben und dem Gehäuse so gekuppelt ist, daß sie eine Wandung der Austrittskammer (204) bildet.

**Revendications**

1. Régulateur de pression, comprenant un boîtier (32) contenant des chambres de sorties (22, 102, 204) et d'entrée (20, 100, 202) communiquant par l'intermédiaire d'un siège (40, 126, 226) de soupape placé entre les chambres d'entrée (20, 100, 202) et de sortie (22, 102, 204), un piston (34, 120, 205) disposé afin qu'il soit mobile dans le boîtier (32), le piston (34, 120, 205) étant couplé à un obturateur (48, 122, 214) qui vient coopérer de manière étanche avec le siège (40, 126, 226) lorsque le piston (34, 120, 205) est dans une première position, un dispositif (56, 124, 216, 222, 220) destiné à assurer l'étanchéité au niveau du piston (34, 120, 205) afin qu'il empêche l'écoulement d'un fluide au-delà du piston (34, 120, 205) sauf par l'intermédiaire du siège (40, 126, 210), l'obturateur (48, 122, 214) ayant une configuration telle que le fluide qui se trouve dans la chambre de sortie (22, 102, 204) exerce une force résultante tendant à repousser l'obturateur (48, 122, 214) vers le siège (40, 126, 210), et un despositif (62, 140, 244) destiné à rappeler le piston afin qu'il s'écarte du siège (40, 126, 210), le régulateur étant caractérisé en ce que le boîtier comporte un dispositif évent (38, 118) communiquant avec l'atmosphère externe, et en ce que le dispositif de rappel (62, 140, 244) et l'obturateur (48, 122, 214) comportent un tronçon central (50) qui, du côté opposé au siège (40, 126, 226), est soumis à la pression de sortie et qui, de l'autre côté, est soumis à la force du dispositif de rappel (62, 140, 244) et à la pression transmise par le dispositif évent (38, 118).

2. Régulateur de pression selon la revendication 1, caractérisé en outre en ce que le boîtier (32) a un tronçon cylindrique (36, 104, 208) assurant la communication entre les chambres de sortie (22, 102, 204) et d'entrée (20, 100, 202), le siége (40, 126, 226) étant placé à une première extrémité du tronçon cylindrique (36, 104, 208), le piston (34, 120, 205) étant logé afin qu'il afin qu'il soit mobile dans le tronçon cylindrique (36, 104, 208) et le dispositif d'étanchéite (56, 124, 216, 222, 220) empêchant l'écoulement du fluide hors du cylindre autrement que par le siège (40, 126, 226).

3. Régulateur de pression selon la revendication 1, caractérisé en outre en ce que le dispositif de rappel (62, 140) est logé dans le piston (34, 120) et dans le boîtier (32) et est séparé de manière étanche, par le piston (34, 120), des chambres d'entrée (20, 100) et de sortie (22, 102).

4. Régulateur de pression selon la revendication 2, caractérisé en outre en ce que l'obturateur (48, 122, 214) a un diamètre supérieur à celui du tronçon cylindrique (36, 104, 208).

5. Régulateur de pression selon la revendication 4, caractérisé en outre en ce que l'obturateur (48) a plusieurs doigts (58) espacés circonférentiellement autour de l'obturateur (48) et placés à une distance supérieure à celle du tronçon cylindrique (36) afin que le fluide puisse s'encouler dans l'obturateur (48) et autour de celui-ci.

6. Régulateur selon la revendication 1, caractérisé en outre en ce que le piston (34, 120, 205) a une configuration telle que la pression du fluide dans la chambre d'entrée (20, 100, 202) et dans le tronçon cylindrique (36, 104, 208) n'exerce pas de force axiale résultante notable sur le piston (34, 120, 205).

7. Régulateur de pression selon la revendication 1, caractérisé en outre par un dispositif (134, 136, 138) destiné à comprimer le dispositif de rappel (140) a l'une quelconque de plusieurs positions, si bien qu'une force de rappel appliquée au piston (205) peut être modifiée sélectivement.

8. Régulateur de pression selon la revendication 1, caractérisé en outre en ce que le dispositif d'etanchéité (56, 124, 216) est un dispositif destiné à assurer la coopération étanche par coulissement du piston afin qu'il empêche les fuites de fluide dans le tronçon cylindrique (36, 208, 104).

9. Régulateur de pression selon la revendication 2, caractérisé en ce que le dispositif d'étanchéite (216, 220, 222) comporte un premier diaphragme élastique (222) monté entre le piston (205) et le boîtier afin qu'il délimite une paroi de la chambre d'entrée (202) et ferme le boîtier de manière étanche en empêchant les fuites de fluide, le diaphragme (222) constituant un dispositif permettant le déplacement alternatif du piston en translation par rapport à la première position, le siège (226) de soupape et le premier diaphragme élastique (222) ayant des proportions telles que le fluide pénétrant dans la chambre d'entrée (202) ne crée pas de forces résultantes axiales notables appliquées au piston (205).

10. Régulateur de pression selon la revendication 8, caractérisé en outre en ce que le dispositif d'étanchéité (216) comporte en outre un second diaphragme élastique (220) ayant un diamètre efficace inférieur à celui du premier diaphragme élastique (222), le second diaphragme élastique (220) étant couplé entre le piston et le boîtier afin qu'il délimite un paroi de la chambre de sortie (204).

0 081 229

Fig. 1

Fig. 2

1

*Fig. 3*

*Fig. 4*

Fig. 5

Fig. 6

0 081 229

Fig. 7

4

Fig. 8